# EUROPÄISCHE PATENTSCHRIFT

(11) **EP 3 762 793 B1**
(45) Veröffentlichungstag und Bekanntmachung des Hinweises auf die Patenterteilung: **26.08.2026**
(21) Anmeldenummer: 19709671.2
(22) Anmeldetag: 04.03.2019
(51) Int. Cl.: G05B 19/409, B29C 45/76, G06F 3/048, G06F 1/18, G06F 3/02, G06F 3/023, G06F 3/0362, G06F 3/0482, G06F 3/0483

(54) **SPRITZGIESSMASCHINE**
INJECTION MOULDING MACHINE
MACHINE DE MOULAGE PAR INJECTION

(30) Priorität: 05.03.2018 DE 102018104937
(43) Veröffentlichungstag der Anmeldung: 13.01.2021
(73) Patentinhaber: NETSTAL Maschinen AG, 8752 Näfels (CH)
(72) Erfinder: DENZLER, Björn, 8645 Rapperswil-Jona (CH); MÜLLER, Daniel, 8722 Kaltbrunn (CH); HAUSMANN, Manfred, 8753 Mollis (CH)
(74) Vertreter: Hannke Bittner & Partner mbB Regensburg
(86) Internationale Anmeldenummer: PCT/EP2019/055334
(87) Internationale Veröffentlichungsnummer: WO 2019/170611

(56) Entgegenhaltungen:
- EP-A1- 2 100 197
- EP-A2- 2 644 354
- EP-A2- 2 735 425
- DE-U1- 20 214 899
- US-A1- 2005 116 023

## Beschreibung

Die Erfindung betrifft eine Spritzgießmaschine gemäß dem Oberbegriff von Anspruch 1.

Eine Spritzgießmaschine zeichnet sich durch einen zyklischen und in der Regel vollautomatischen Produktionsbetrieb aus, wobei in jedem Zyklus ein oder mehrere spritzgegossene Formteile hergestellt werden. Vor Inbetriebnahme ist eine Ablaufprogrammierung vorzunehmen. Hierbei handelt es sich um die Programmierung eines Spritzgießzyklus zur Herstellung eines bestimmten Formteils. Die Durchführung einer Ablaufprogrammierung erfolgt mittels einer als Mensch-Maschine-Interface ausgebildeten Bedieneinheit und einer Maschinensteuerung.

Hiervon zu unterscheiden ist der Produktionsbetrieb. Darunter ist derjenige Zustand der Spritzgießmaschine zu verstehen, in welchem üblicherweise vollautomatisch - gegebenenfalls aber auch im Handbetrieb - spritzgegossene Formteile hergestellt werden. Eine Spritzgießmaschine, welche für die Herstellung von ganz bestimmten Formteilen fertig eingerichtet und programmiert ist, muss dann gestartet und in den Produktionsbetrieb gebracht werden. Nach Beendigung der Produktion ist die Spritzgießmaschine aus dem Produktionsbetrieb heraus in einen ausgeschalteten Zustand zu bringen. Vorzugsweise wird dabei nicht direkt aus dem Produktionsbetrieb in den ausgeschalteten Zustand übergegangen, sondern es wird zunächst noch aus- oder leergespritzt und die Spritzgießmaschine wird erst danach ausgeschaltet. Anstelle des vollständigen Ausschaltens der Spritzgießmaschine kann diese auch in einen Wartezustand gebracht werden, welcher auch als "Standby" bezeichnet werden kann. Diese Situation ist vergleichbar mit einem Computer. Nach dem Einschalten bzw. Starten des Computers muss dieser zunächst in einen Betriebszustand gebracht werden, was auch mit dem Begriff des Hochfahrens des Computers bezeichnet wird. Nach Beendigung der Arbeiten am Computer wird der Betriebszustand verlassen und der Computer heruntergefahren, wobei ebenfalls ein "Standby"-Zustand beibehalten werden oder der Computer vollständig ausgeschaltet werden kann. Daher kann vorliegend auch vom "Hochfahren" der Spritzgießmaschine einerseits und vom "Herunterfahren" der Spritzgießmaschine andererseits gesprochen werden. Unter "Hochfahren" der Spritzgießmaschine soll dabei derjenige Prozess verstanden werden, bei welchem die Spritzgießmaschine aus einem vollständig ausgeschalteten Zustand oder einem Standby-Zustand hochgefahren wird, bis sie den Zustand für den Produktionsbetrieb erreicht hat. Unter "Herunterfahren" der Spritzgießmaschine soll derjenige Prozess verstanden werden, bei welchem der Zustand für den Produktionsbetrieb beendet und die Spritzgießmaschine in einen vollständig ausgeschalteten oder einen Standby-Zustand gebracht wird. Für das Hochfahren und das Herunterfahren einer Spritzgießmaschine kann eine geeignete Bedieneinheit und eine Maschinensteuerung verwendet werden.

Aus dem Stand der Technik sind Bedieneinheiten mit einer Vielzahl von Tasten bekannt (EP2100197B1), die einer Bedienperson als Eingabemöglichkeiten zu Verfügung stehen. Eine Bedienperson muss somit für eine Vielzahl von Anwendungsfällen geeignete Tasten betätigen, um eine Spritzgießmaschine aus einem ausgeschalteten Zustand in einen Produktionsbetrieb hochzufahren und die Spritzgießmaschine wieder in einen vollständig ausgeschalteten oder einen Standby-Zustand herunterzufahren. Je nach Anwendungsfall bzw. je nachdem welches Formteil hergestellt werden soll, werden unterschiedliche Anforderungen an das Hochfahren und an das Herunterfahren der Spritzgießmaschine gestellt. Entsprechend variieren auch die hierfür einer Bedienperson zur Verfügung stehenden oder zur Verfügung gestellten aktiven Tasten. Unter aktiven Tasten sollen solche Tasten oder Eingabemöglichkeiten verstanden werden, die mit einer bestimmten Funktion belegt sind und bei deren Betätigung diese Funktion ausgelöst wird. Dabei können einer Taste je nach Betriebszustand der Spritzgießmaschine unterschiedliche Funktionen zugeordnet sein, wie dies aus der EP2100197B1 bekannt ist. Hiervon zu unterscheiden sind Tasten, die zwar vorhanden sind, aber gerade nicht benötigt werden.

Das Dokument EP2735425A2 offenbart eine Bedieneinheit für eine Spritzgießmaschine, wobei ein Bedienprogramm mit einer hierarchischen Systemarchitektur vorgesehen ist. Die hierarchische Systemarchitektur umfasst zumindest eine obere, anlagenspezifische Ebene, in welcher zwischen verschiedenen Anlagenbereichen ausgewählt werden kann, und zumindest eine obere, aufgabenspezifische Ebene, in welcher zischen verschiedenen Aufgabenbereichen ausgewählt werden kann. In Unterebenen werden nur dem ausgewählten Anlagenbereich oder nur dem ausgewählten Aufgabenbereich zugeordnete ablaufrelevante Programmseiten angezeigt.

Das Dokument US2004/093097A1 offenbart ein Verfahren zum Abschalten der elektrischen Stromversorgung bei einer Spritzgießmaschine.

Das Dokument DE20214899U1 offenbart eine Bedieneinrichtung mit Bedientasten und Leuchtelementen, wobei die Bedieneinrichtung ausgebildet ist, einen Roboter aus einem ausgeschalteten Zustand in einen Betriebszustand hochzufahren.

Um eine Spritzgießmaschine ordnungsgemäß und fehlerfrei hochzufahren und in den vollautomatischen Produktionsbetrieb zu bringen, sind in der Regel anwendungsspezifische Kenntnisse erforderlich. Die hierzu auszuführenden Schritte sind sehr zahlreich und stark von dem herzustellenden Formteil abhängig. Es bedarf daher in den meisten Fällen vertiefter Kenntnisse der Spritzgießmaschine und der Anwendung, um die an der Bedieneinheit zur Verfügung stehenden oder im Bedarfsfalle zur Verfügung gestellten Tasten als Eingabemöglichkeiten korrekt und zum richtigen Zeitpunkt einsetzen zu können. Ein erfahrener Anwendungstechniker, d.h. eine Bedienperson mit Kenntnissen über die Spritzgießmaschine und deren Anwendung ist in der Lage, mittels den gegebenen Tasten bzw. Eingabemöglichkeiten der Bedieneinheit das Hochfahren und das Herunterfahren der Spritzgießmaschine korrekt auszuführen.

Es besteht jedoch zunehmend Bedarf an Bedienpersonen mit einer geringeren fachlichen Qualifikation, insbesondere um die Personalkosten beim Betrieb einer Spritzgießmaschine reduzieren zu können. Gleichwohl soll auch beim Einsatz von solchen Bedienpersonen sichergestellt sein, dass ein ordnungsgemäßer Betrieb der Spritzgießmaschine sichergestellt ist und einwandfreie Formteile darauf hergestellt werden können, und zwar ohne dass für diese Bedienpersonen eine speziell auf ihre Bedürfnisse zugeschnittene Schulung erforderlich ist. Insbesondere das Hochfahren und das Herunterfahren einer Spritzgießmaschine sollen auch von solchen Bedienpersonen sicher durchgeführt werden können.

Ausgehend hiervon liegt der Erfindung die Aufgabe zugrunde, eine Spritzgießmaschine anzugeben, bei der die Bedienung derart vereinfacht ist, dass eine Bedienperson nur ein Bedienelement oder eine kleine Anzahl an Bedienelementen betätigen muss, um die Spritzgießmaschine in den Produktionsbetrieb hochzufahren und aus dem Produktionsbetrieb wieder herunterzufahren, wobei die Bedienung unabhängig von dem auf der Spritzgießmaschine produzierten Formteil immer gleich sein soll und wobei die Bedienperson zudem nicht über anwendungsspezifische Kenntnisse verfügen muss.

Die Lösung dieser Aufgabe erfolgt durch eine Spritzgießmaschine mit den Merkmalen von Anspruch 1, ein Computerprogrammprodukt gemäß Anspruch 13 und ein computerlesbares Medium gemäß Anspruch 15**.** Vorteilhafte Ausgestaltungen und Weiterentwicklungen finden sich in den Unteransprüchen.

Erfindungsgemäß sind das Hochfahren der Spritzgießmaschine und das Herunterfahren der Spritzgießmaschine jeweils in mehrere Phasen eingeteilt und für jede Phase des Hochfahrens und für jede Phase des Herunterfahrens sind bestimmte Maschinenbewegungskommandos und/oder bestimmte Maschinenzustandsänderungskommandos vorgesehen, deren Ausführung für die Durchführung der jeweiligen Phase erforderlich ist. Für jede Phase ist eine für diese Phase charakteristische Sequenz an bestimmten Maschinenbewegungskommandos und/oder Maschinenzustandsänderungskommandos vorprogrammiert. An der Bedieneinheit sind ein oder mehrere Bedienelemente vorgesehen, bei deren Betätigung eine vorprogrammierte Sequenz aktiviert und eine Phase des Hochfahrens oder des Herunterfahrens der Spritzgießmaschine gestartet werden kann. Dadurch werden die den Maschinenbewegungskommandos und/oder den Maschinenzustandsänderungskommandos dieser Sequenz zugeordneten Funktionen des Hochfahrens oder des Herunterfahrens der Spritzgießmaschine ausgelöst.

Das oder die Bedienelemente können in verschiedenen Ausführungsformen vorgesehen und für ihre Funktion vorprogrammiert sein. Ein vorprogrammiertes Bedienelement bedeutet, dass bei dessen Betätigung eine bestimmte Sequenz gestartet werden kann.

Gemäß einer Ausführungsform können ein als Hochfahr-Taste ausgebildetes Bedienelement zum Hochfahren der Spritzgießmaschine und ein als Herunterfahr-Taste ausgebildetes Bedienelement zum Herunterfahren der Spritzgießmaschine vorgesehen sein. Durch die Betätigung der Hochfahr-Taste kann eine Phase des Hochfahrens gestartet und dabei eine für diese Phase des Hochfahrens vorprogrammierte Sequenz an bestimmten Maschinenbewegungskommandos und/oder Maschinenzustandsänderungskommandos aktiviert werden, wobei entsprechend dem vorprogrammierten Ablauf die diesen Maschinenbewegungskommandos und/oder Maschinenzustandsänderungskommandos zugeordneten Funktionen des Hochfahrens der Spritzgießmaschine ausgelöst werden. Entsprechend kann durch die Betätigung der Herunterfahr-Taste eine Phase des Herunterfahrens ausgelöst und dabei eine für diese Phase des Herunterfahrens vorprogrammierte Sequenz an bestimmten Maschinenbewegungskommandos und/oder Maschinenzustandsänderungskommandos aktiviert werden, wobei entsprechend dem vorprogrammierten Ablauf die diesen Maschinenbewegungskommandos und/oder Maschinenzustandsänderungskommandos zugeordneten Funktionen des Herunterfahrens der Spritzgießmaschine ausgelöst werden.

Die Einteilung des Hochfahrens und des Herunterfahrens der Spritzgießmaschine in mehrere Phasen bedeutet folgendes: Beim Durchlaufen einer Phase wird der Betriebszustand der Spritzgießmaschine verändert und zwar in der Weise, dass der Betriebszustand der Spritzgießmaschine von einem Zustand vor dem Starten der Phase bzw. am Beginn der Phase bis zum nächsten Zustand am Ende der Phase verändert wird. Von Phase zu Phase wird also der Betriebszustand der Spritzgießmaschine verändert.

Dadurch wird die Bedienung beim Hochfahren und beim Herunterfahren der Spritzgießmaschine für den Maschinenbediener einfacher und sicherer. Unter dem Begriff "Maschinenbediener" ist eine Bedienperson zu verstehen, die über kein oder nur ein geringes Prozesswissen verfügt. In der Regel hat ein Maschinenbediener die Aufgabe, den ordnungsgemäßen Betrieb der Spritzgießmaschine zu überwachen und eventuell kleinere Qualitätssicherungen vorzunehmen. Hiervon zu unterscheiden ist ein Anwendungstechniker. Unter dem Begriff Anwendungstechniker ist eine Bedienperson zu verstehen, die über ein vertieftes Prozesswissen verfügt. Ein Anwendungstechniker ist in der Regel in der Lage, einen Spritzgießzyklus zu programmieren. Vorliegend obliegt es einem Anwendungstechniker, die Bedienelemente bzw. die Tasten, die einem Maschinenbediener zum Hochfahren und zum Herunterfahren der Spritzgießmaschine zur Verfügung gestellt werden, zu programmieren. Die Sequenz an Maschinenbewegungskommandos und/oder Maschinenzustandsänderungskommandos einer Phase wird von einem Anwendungstechniker vorprogrammiert und von einem Maschinenbediener ausgeführt, wenn dieser die Bedienelemente bzw. die Tasten zum Hochfahren und zum Herunterfahren der Spritzgießmaschine betätigt.

Dadurch wird auch der Schulungsaufwand für die Bedienpersonen massiv reduziert. Für den Betrieb der Spritzgießmaschine können Bedienpersonen eingesetzt werden, die keine oder nur rudimentäre Kenntnisse über die Spritzgießmaschine und den Prozess zur Herstellung eines ganz bestimmten Formteils Bescheid wissen müssen.

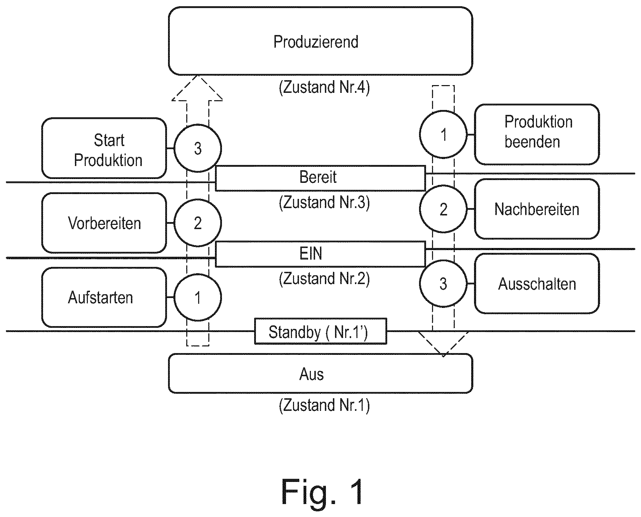

Das Hochfahren und das Herunterfahren der Spritzgießmaschine kann in mehrere Phasen gegliedert werden, wobei von Phase zu Phase der Betriebszustand der Spritzgießmaschine verändert wird. Vorzugsweise kann das Hochfahren und das Herunterfahren der Spritzgießmaschine in drei Phasen gegliedert werden, die zwischen vier Betriebszuständen - oder kurz nur Zuständen - der Spritzgießmaschine liegen. Dies soll nachfolgend unter Bezugnahme auf die Figur 1 näher beschrieben werden.

Zunächst können folgende Zustände der Spritzgießmaschine definiert werden:
Zustand Nr. (1) = "AUS" (OFF)

Die Spritzgießmaschine befindet sich entweder in einem vollständig ausgeschalteten Zustand (d.h. keine Energieversorgung) oder die Spritzgießmaschine ist zwar eingeschaltet, aber noch nicht betriebsbereit. In diesem Zustand ist die Steuerung der Spritzgießmaschine eingeschaltet, aber sämtliche Aktoren (Motoren, Heizungen, Kühlwasser und Peripherie etc.) sind ausgeschaltet. In diesem Zustand kann die Spritzgießmaschine über mehrere Stunden stehen bleiben, ohne dass dabei viel Energie benötigt wird. Mit der Steuerung kann gearbeitet werden (Datensatz laden, Parameter einstellen etc.), Bewegungen an der Maschine sind jedoch nicht möglich.

### Zustand Nr. (1') = "Standby"

Es handelt sich um einen bedarfsweise anfahrbaren Zwischenzustand, der sich dadurch auszeichnet, dass Energie gespart wird und in der Plastifiziereinheit vorhandenes Kunststoffmaterial geschont wird. Vorzugsweise sollte jedoch vor dem Anfahren des "Standby"-Zustands die Plastifizierung leergespritzt werden. In der Regel sind in diesem "Standby"-Zustand die Antriebe ausgeschaltet und die Heizungen auf reduzierte Temperaturen eingestellt. Dieser Zustand ist sinnvollerweise dann einzunehmen, wenn die Produktion störungsbedingt für längere Zeit unterbrochen wird und nach der Behebung des Problems die Produktion wieder aufgenommen werden soll. Da die Heizungen nur reduziert und nicht komplett ausgeschaltet sind, reduziert sich bei der Wiederaufnahme der Produktion das langwierige Aufheizen der Temperaturzonen.

### Zustand Nr. (2) = "EIN" (ON)

Die Spritzgießmaschine ist betriebsbereit. Dies bedeutet, dass alle benötigen Aktoren eingeschaltet sind und alle Temperaturzonen sich im Sollbereich befinden. In diesem Zustand können die einzelnen Aktoren / Achsen der Spritzgießmaschine zwar verwendet werden, der Zustand des Kunststoffs in der Plastifizierung ist jedoch nicht definiert. Eventuell befindet sich darin alter Kunststoff, der zuerst noch ausgespritzt werden muss oder aber die Plastifizierung ist noch leer.

### Zustand Nr. (3) = "BEREIT" (READY)

Die Maschine ist bereit für die Produktion. In diesem Zustand befindet sich die richtige Menge an Kunststoff in der Plastifizierung, damit mit der Produktion gestartet werden kann. Der Kunststoff in der Plastifizierung ist von guter Qualität, das heißt es wurde zuvor bei Bedarf ausgespritzt. Alle Achsen sind in der Grundposition zum Starten der Produktion.

### Zustand Nr. (4) = "PRODUZIEREND" (PRODUCING)

Die Spritzgießmaschine befindet sich im vollautomatischen Produktionsbetrieb; es werden spritzgegossene Formteile hergestellt.

Zwischen den vorgenannten Zuständen liegen die Phasen des Hochfahrens und des Herunterfahrens der Spritzgießmaschine.

### Hochfahren der Spritzgießmaschine (linker Pfeil in der Figur 1)

### Phase = "Starten"

Bei diesem Vorgang wird die Spritzgießmaschine eingeschaltet und einige Baugruppen oder Maschinenteile werden aktiviert. Dieser Vorgang dauert relativ lange. Es müssen zum richtigen Zeitpunkt einzelne Aktoren eingeschaltet werden. Ferner ist das Erreichen bestimmter Temperaturen von einzelnen Zonen der Plastifiziereinheit oder im Werkzeug oder von ganzen Baugruppen an der Spritzgießmaschine, einschließlich des Werkzeugs, von Bedeutung.

### Phase = "Vorbereiten"

In dieser Phase muss sichergestellt werden, dass das später für die Produktion zu verwendende Kunststoffmaterial von ausreichender Qualität ist. Rückstände in der Plastifiziereinheit müssen ausgespritzt werden und das neue Kunststoffmaterial muss ohne Blasen und Rückstände dosiert werden. Dazu muss der Bediener die Plastifiziereinheit in die sogenannte Ausspritzposition bringen, mehrfach ausspritzen und zum Schluss wieder in den sicheren Bereich vorfahren. Je nach Anwendungsfall kann die Plastifiziereinheit in dieser Phase am Werkzeug andocken oder erst mit Start der Produktion. Je nach Werkzeug / Anwendung muss dabei die Form geschlossen bzw. offen sein. Ganz zum Schluss werden alle Achsen in die Ausgangsstellung gebracht, um in der nächsten Phase die Produktion starten zu können.

### Phase 3 = "Start der Produktion"

Nachdem die Spritzgießmaschine und das Kunststoffmaterial vorbereitet sind, geht es in dieser Phase darum, den automatischen Produktionsbetrieb anzufahren und einzunehmen. Zu Beginn des Produktionsbetriebs werden in der Regel einzelne Spritzgießzyklen gefahren um sicherstellen zu können, dass alle Formteile korrekt gespritzt wurden (d.h. alle Kavitäten korrekt gefüllt) und sauber ausgeworfen werden. Erst nachdem sich der Bediener davon überzeugt hat, dass alles ordnungsgemäss funktioniert, wird in den vollautomatischen Produktionsbetrieb gewechselt. Der vollautomatische Produktionsbetrieb zeichnet sich dadurch aus, dass die vorprogrammierten Spritzgießzyklen automatisch ablaufen und repetitiv spritzgegossene Formteile hergestellt werden.

Bei Erreichen des Produktionsziels oder im Falle einer Unterbrechung muss der Bediener die Spritzgießmaschine vom Produktionsbetrieb wieder ordnungsgemäss herunterfahren und ausschalten oder in einen Standby-Zustand bringen können. Analog zum Hochfahren der Spritzgießmaschine kann auch dieser Prozess in drei Phasen aufgeteilt werden:
Herunterfahren der Spritzgießmaschine (rechter Pfeil in der Figur 1)

### Phase 1 = "Produktion beenden"

Damit keine halbfertigen Formteile und unnötig Kunststoff verschwendet wird, muss der Produktionsbetrieb ordnungsgemäss beendet werden. Je nach Anwendung und Anforderungen des Betriebs sind zum Schluss der Produktion spezielle Zustände einzunehmen (z.B. Spritzgießwerkzeug bleibt geschlossen).

### Phase 2 = Nachbereiten

In dieser Phase soll Kunststoff, welcher sich noch in der Plastifizierung befindet, ausgespritzt werden, damit die Plastifizierung beim nächsten Einsatz möglichst wenig bereits schon einmal plastifizierten Kunststoff enthält. Achsen können zudem bei Bedarf an spezielle Positionen bewegt werden.

### Phase 3 = Ausschalten

Das Ausschalten der Motoren und Heizungen sowie des Kühlwassers muss in einer bestimmten Reihenfolge ablaufen, damit keine Schäden an Werkzeug und Maschine entstehen. Hier sind vor allem die Temperaturen in Werkzeug und Plastifizierung für das Ausschalten einzelner Aktoren entscheidend.

Die Bedieneinheit stellt für alle vorgenannten Phasen eine Vielzahl von Tasten zur Verfügung, um bestimmte Aktionen auslösen und um bestimmte Zustände realisieren zu können. Dabei werden bestimmte Symbole verwendet, mit der die Funktion visualisiert wird, die beim Betätigen einer so gekennzeichneten Taste ausgelöst wird. Solche Tasten können als mechanische Tasten (Hardware-Tasten) oder als Touchscreen-Tasten (Software-Tasten) ausgebildet sein. Zudem gibt es an der Bedieneinheit einen Ablaufeditor, mit dem der Ablauf eines Spritzgießzyklus oder andere (Teil)abläufe bzw. Ablaufsequenzen - ganz allgemein Sequenzen - der Spritzgießmaschine programmiert werden können. In dem Ablaufeditor werden einer Bedienperson eine Vielzahl von Kommandos zur Verfügung gestellt, wobei in der Regel gleiche oder ähnliche Symbole verwendet werden wie bei den vorgenannten Tasten. Anstelle des Begriffs "Symbol" wird häufig auch der Begriff "Icon" verwendet. Während bei der Betätigung einer Taste die hierzu gehörende Funktion unmittelbar ausgelöst wird, werden die zu den Kommandos gehörenden Funktionen erst dann ausgelöst, wenn der mit diesen Kommandos programmierte Ablauf bzw. Teilablauf oder Sequenz gestartet wird.

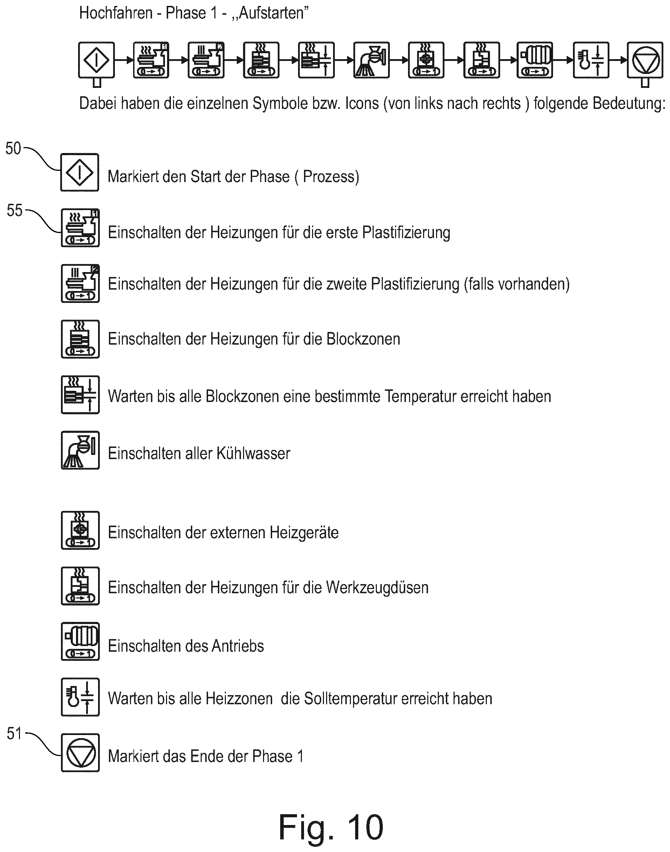

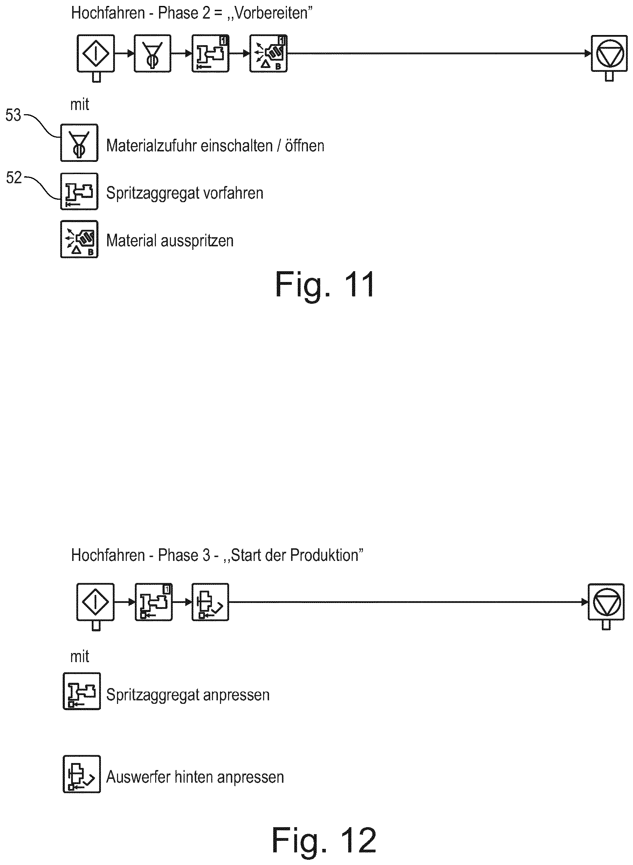

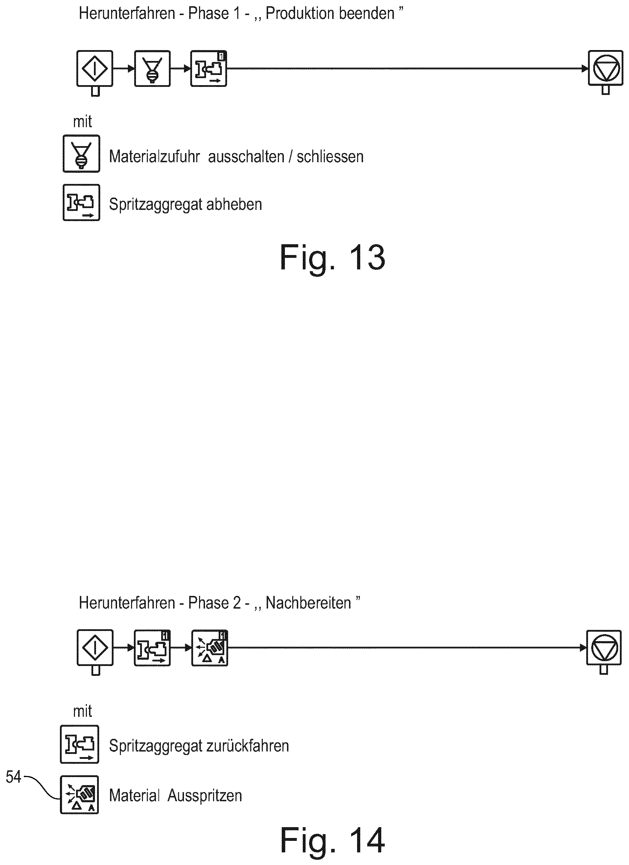

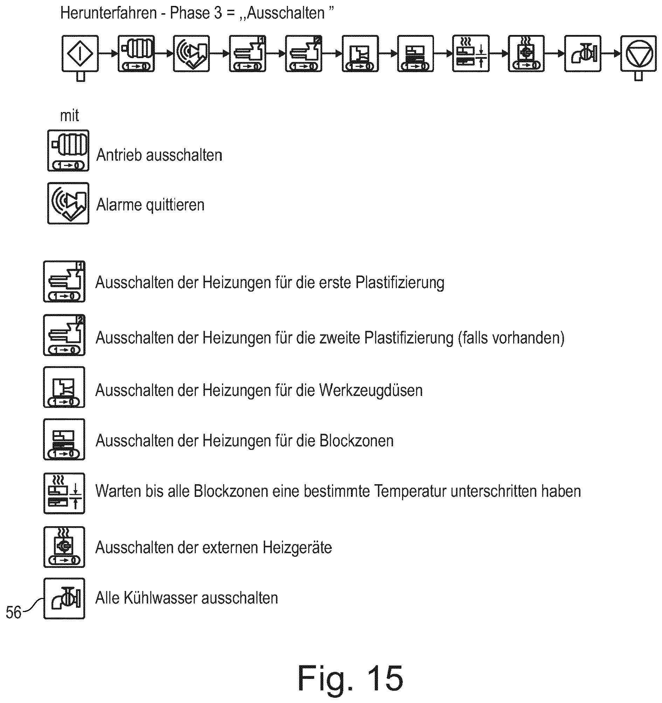

In den Figuren 10 bis 15 soll für jede vorgenannte Phase eine typische Auswahl an Symbolen bzw. Icons dargestellt und kurz beschrieben werden.

Die Symbole 50 und 51 haben durchgehend die gleiche Bedeutung, so dass nachfolgend auf eine erneute Angabe von deren Bedeutung verzichtet werden kann.

Es können Symbole zu Funktionen betreffend eine Maschinenbewegung und Symbole zu Funktionen betreffend eine Änderung des Maschinenzustands unterschieden werden.

Demzufolge gibt es Maschinenbewegungstasten, d.h. Tasten, bei deren Betätigung eine Baugruppe oder ein einzelnes Teil einer Maschine bewegt wird, und es gibt Maschinenbewegungskommandos, d.h. Kommandos, bei deren Ausführung eine Baugruppe oder ein einzelnes Teil einer Maschine bewegt wird. Ein Beispiel für eine Maschinenbewegung ist das Symbol:
52 Spritzaggregat vorfahren

Auch diejenigen Tasten und Kommandos, die die Förderung von Kunststoffmaterial betreffen, können als Maschinenbewegungstasten bzw. Maschinenbewegungskommandos angesehen werden, weil dort Teile der Spritzgießmaschine verfahren werden. Es handelt sich beispielsweise um folgende Symbole:
53 Materialzufuhr einschalten / öffnen
54 Ausspritzen

Im Hinblick auf die Änderung des Zustands der Maschine gibt es Maschinenzustandsänderungstasten, d.h. Tasten, bei deren Betätigung der Zustand der Spritzgießmaschine verändert wird, wobei die Zustandsänderung eine Baugruppe oder ein oder mehrere Teile der Spritzgießmaschine betrifft. Ebenso gibt es Maschinenzustandsänderungskommandos, d.h. Kommandos, bei deren Ausführung der Zustand der Spritzgießmaschine verändert wird, wobei die Zustandsänderung eine Baugruppe oder ein oder mehrere Teile der Spritzgießmaschine betrifft.

Beispiele hierfür sind:
55 Heizung ein/aus
56 Kühlwasser ein/aus

Die Maschinenbewegungstasten und/oder die Maschinenzustandsänderungstasten können als mechanische Tasten (Hardware-Tasten) oder als Touchscreen-Tasten (Software-Tasten) ausgebildet sein. Die Maschinenbewegungstasten und die Maschinenzustandsänderungstasten verfügen auf oder in einem Bereich um die jeweilige Taste herum über ein geeignetes Symbol. Bei den Maschinenbewegungstasten gibt das Symbol an, welche Baugruppe oder welches Teil der Spritzgießmaschine bei Betätigung der Maschinenbewegungstaste bewegt wird und gegebenenfalls auch die Richtung der Bewegung und der Zweck der Bewegung (z.B. Form auffahren, Form zufahren). Bei den Maschinenzustandsänderungstasten gibt das Symbol an, welcher Zustand geändert und gegebenenfalls erreicht werden soll; gegebenenfalls kann das Symbol auch anzeigen, wie die Zustandsänderung bewirkt werden soll (z.B. Aufheizen einer Zone; Einschalten / Ausschalten von Kühlwasser).

Die Maschinenbewegungskommandos und die Maschinenzustandsänderungskommandos können als Symbol oder Icon auf dem Bildschirm des Ablaufeditors zur Verfügung gestellt werden.

Gemäß einem Kerngedanken der vorliegenden Erfindung werden die für jede Phase des Hochfahrens und für jede Phase des Herunterfahrens bestimmten Maschinenbewegungstasten und Maschinenzustandsänderungstasten nicht einzeln ausgewählt und betätigt, sondern es erfolgt eine Vorprogrammierung. Bei dieser Vorprogrammierung werden Maschinenbewegungskommandos und/oder Maschinenzustandsänderungskommandos im Ablaufeditor zu einer Sequenz an Kommandos zusammengestellt.

Ein solcher Ablaufeditor ist für sich genommen bei der Programmierung von Produktionsabläufen bei Spritzgießmaschinen bekannt. Mittels eines solchen Ablaufeditors können Produktionsabläufe oder allgemein Verfahrensschritte beim Betrieb einer Spritzgießmaschine von einer Bedienperson in die Bedieneinheit der Spritzgießmaschine eingegeben werden, insbesondere um einen Maschinenablauf zu programmieren. Man spricht auch von einer Ablaufprogrammierung einer Spritzgießmaschine. Hierbei werden auf der Bedieneinheit der Spritzgießmaschine einer Bedienperson Eingabemasken zur Verfügung gestellt und darin mit Kommandos hinterlegte Symbole/Icons/Tasten angezeigt, die die Bedienperson auswählen kann, um ein Teil bzw. eine Komponente oder eine Baugruppe einer Spritzgießmaschine gemäß diesem Kommando zu betätigen (Maschinenbewegungskommandos) oder um einen Zustand eines Teils bzw. einer Komponente oder einer Baugruppe gemäß diesem Kommando zu verändern (Maschinenzustandsänderungskommandos). Beispiele für derartige Kommandos sind vorstehend näher beschrieben worden.

Bei der zu der vorliegenden Erfindung gehörigen Vorprogrammierung von Sequenzen an Maschinenbewegungskommandos und/oder Maschinenzustandsänderungskommandos geht es also darum, aus einem Vorrat an Maschinenbewegungskommandos und Maschinenzustandsänderungskommandos eine geeignete Auswahl zu treffen und zu einer Sequenz des Hochfahrens bzw. des Herunterfahrens einer Spritzgießmaschine zusammenzustellen. Diese Vorprogrammierung kann an der Bedieneinheit der Spritzgießmaschine selbst erfolgen, insbesondere bevor diese Spritzgießmaschine an einen Kunden ausgeliefert wird. Sie kann auch zu einem späteren Zeitpunkt von einem Anwendungstechniker oder einem Fachmann für die Ablaufprogrammierung vor Ort beim Kunden vorgenommen werden, insbesondere von Personen mit entsprechenden Kenntnissen aus dem Hause des Herstellers der Spritzgießmaschine. Die Vorprogrammierung kann aber auch losgelöst von einer Spritzgießmaschine an einem Computer vorgenommen werden. Hierbei wird ein Vorrat an Maschinenbewegungskommandos und an Maschinenzustandsänderungskommandos in einer Speichereinrichtung bereitgehalten und steht für die Vorprogrammierung von Sequenzen zur Verfügung. Es kann sich um eine in den Computer integrierte Speichereinrichtung handeln oder um eine separate Speichereinrichtung wie zum Beispiel ein computerlesbares Speichermedium, eine externe Festplatte, ein USB-Stick oder dergleichen. Ein Anwendungstechniker oder ein Fachmann für die Ablaufprogrammierung einer Spritzgießmaschine kann somit losgelöst von einer bestimmten Spritzgießmaschine am Computer Maschinenbewegungskommandos und Maschinenzustandsänderungskommandos auswählen und zu einer gewünschten Sequenz zusammenstellen. Dabei kann am Computer eine Benutzeroberfläche zur Verfügung gestellt werden, die einem Ablaufeditor bei der Ablaufprogrammierung einer Spritzgießmaschine entspricht oder diesem nachgebildet ist. Der Anwendungstechniker bzw. der Fachmann für die Ablaufprogrammierung kann somit in einfacher Art und Weise in einer ihm bekannten Benutzeroberfläche auch die Vorprogrammierung der Sequenzen für das Hochfahren und das Herunterfahren der Spritzgießmaschine vornehmen.

Im Ergebnis handelt es sich bei einer vorprogrammierten Sequenz um ein Computerprogramm, welches beim Hochfahren oder beim Herunterfahren der Spritzgießmaschine abläuft. Für jede Phase des Hochfahrens und für jede Phase des Herunterfahrens einer Spritzgießmaschine gibt es somit jeweils ein Computerprogramm, das beim Starten einer Phase gestartet wird. Da das Hochfahren bzw. das Herunterfahren einer Spritzgießmaschine in mehrere Phasen eingeteilt ist, werden beim Hochfahren bzw. beim Herunterfahren mehrere der vorgenannten Computerprogramme ausgeführt, nämlich die Computerprogramme der jeweiligen Sequenzen. Demzufolge kann man eine Abfolge von Computerprogrammen für das Hochfahren und eine Abfolge von Computerprogrammen für das Herunterfahren identifizieren. Jede der vorgenannten Abfolgen kann daher als Gesamtprogramm für das Hochfahren bzw. als Gesamtprogramm für das Herunterfahren bezeichnet werden. Die Computerprogramme der einzelnen Sequenzen und/oder die Gesamtprogramme können auf computerlesbaren Speichermedien/Datenträgern gespeichert und bereitgehalten werden, so dass sie zu einem beliebigen Zeitpunkt in die Maschinensteuerung einer Spritzgießmaschine eingelesen werden können. Ein computerlesbares Medium kann also Computerprogramme der einzelnen Sequenzen und/oder ein oder mehrere Gesamtprogramme umfassen. Grundsätzlich ist es also möglich, eine Spritzgießmaschine ohne die erfindungsgemäße Möglichkeit des vereinfachten Hochfahrens und Herunterfahrens auszuliefern und zu einem späteren Zeitpunkt mit der hier beschriebenen Erfindung auszustatten bzw. nachzurüsten. Es ist lediglich erforderlich, dass die für diese Spritzgießmaschine geeigneten Computerprogramme der Sequenzen oder die für diese Spritzgießmaschine geeigneten Gesamtprogramme in die Maschinensteuerung dieser Spritzgießmaschine eingelesen werden.

Zu der vorliegenden Erfindung gehört somit auch ein Computerprogrammprodukt, umfassend vorprogrammierte Sequenzen an Maschinenbewegungskommandos und/oder Maschinenzustandsänderungskommandos, wobei die Sequenzen ausgebildet sind, um die Spritzgießmaschine aus einem ausgeschalteten Zustand oder aus einem Standby-Zustand in einen Produktionsbetrieb zur Herstellung von spritzgegossenen Formteilen hochfahren und aus dem Produktionsbetrieb zurück in einen ausgeschalteten oder einen Standby-Zustand herunterfahren zu können, wobei das Hochfahren der Spritzgießmaschine und das Herunterfahren der Spritzgießmaschine jeweils in mehrere Phasen eingeteilt ist, und wobei für jede Phase des Hochfahrens und für jede Phase des Herunterfahrens eine Sequenz an bestimmten Maschinenbewegungskommandos und/oder bestimmten Maschinenzustandsänderungskommandos vorprogrammiert ist. Die Kommandos (Befehle) des Computerprogramms bzw. des Computerprogrammprodukts bewirken also bei ihrer Ausführung, dass die Spritzgießmaschine aus einem ausgeschalteten Zustand oder aus einem Standby-Zustand in einen Produktionsbetrieb zur Herstellung von spritzgegossenen Formteilen hochgefahren und aus dem Produktionsbetrieb zurück in einen ausgeschalteten oder einen Standby-Zustand heruntergefahren wird. Man kann auch sagen, dass das Computerprogramm Kommandos bzw. Befehle umfasst, nämlich Maschinenbewegungskommandos und/oder Maschinenzustandsänderungskommandos, die bei der Ausführung des Programms durch einen Computer, insbesondere bei der Ausführung des Programms durch einen in der Maschinensteuerung der Spritzgießmaschine integrierten Computer, diesen Computer veranlassen, die Schritte des Hochfahrens und - zu einem späteren Zeitpunkt - des Herunterfahrens der Spritzgießmaschine auszuführen. Bei einem solchen in der Maschinensteuerung integrieren Computer kann es sich auch lediglich um einen Prozessor (CPU) handeln, der für das Einlesen und die Ausführung des Computerprogramms geeignet und vorgesehen ist. Das Computerprogramm kann auf einem Datenträger bereitgehalten werden, auf den der Prozessor zugreifen kann. Der Datenträger kann in der Maschinensteuerung integriert sein oder es kann sich um einen externen Datenträger handeln, auf den der Prozessor zugreifen kann. Gegebenenfalls kann ein externer Datenträger an die Maschinensteuerung angeschlossen werden (z.B über USB, **LAN,** Bluetooth oder dergleichen) und das Computerprogramm in einen internen Datenspeicher in der Maschinensteuerung übertragen werden. Bei der Ausführung des Programms wird für jede Phase des Hochfahrens und für jede Phase des Herunterfahrens eine für die jeweilige Phase vorprogrammierte Sequenz an Kommandos ausgeführt. Bei der Ausführung des Programms kann vorgesehen sein, dass am Anfang oder am Ende einer Phase die Ausführung des Programms angehalten wird und erst nach einer Eingabe durch eine Bedienperson fortgesetzt wird. Vorzugsweise erfolgt die Unterbrechung der Ausführung des Programms jeweils am Anfang einer Phase. Zusätzlich kann in ausgewählten Phasen ein Kommando an beliebiger Stelle eingefügt werden, welches von der Bedienperson eine Eingabe verlangt.

Eine Abfolge von Sequenzen für das Hochfahren und/oder eine Abfolge von Sequenzen für das Herunterfahren können jeweils zu einem Gesamtprogramm des Hochfahrens und/oder zu einem Gesamtprogramm des Herunterfahrens zusammengefasst sein. Man kann somit von einer ersten Abfolge von Computerprogrammen für das Hochfahren als Gesamtprogramm des Hochfahrens und von einer zweiten Abfolge von Computerprogrammen für das Herunterfahren als Gesamtprogramm für das Herunterfahren sprechen.

An der Bedieneinheit sind ein oder mehrere Bedienelemente vorgesehen, bei deren Betätigung das zu einer vorprogrammierte Sequenz gehörende Computerprogramm aktiviert und eine Phase des Hochfahrens oder des Herunterfahrens gestartet wird. Mit dem Start einer Phase wird das Computerprogramm dieser Sequenz abgefahren, wobei die den Maschinenbewegungskommandos und/oder den Maschinenzustandsänderungskommandos dieser Sequenz zugeordneten Funktionen des Hochfahrens oder des Herunterfahrens der Spritzgießmaschine ausgelöst werden.

Zu der vorliegenden Erfindung gehört ferner ein computerlesbares Medium, insbesondere ein computerlesbarer Datenträger, auf dem ein erfindungsgemäßes Computerprogrammprodukt gespeichert ist. Ein erfindungsgemäßes Computerprogrammprodukt kann beispielsweise auf einer externen Festplatte, einem optisch lesbaren Datenträger, einem USB-Stick oder dergleichen gespeichert sein.

Dabei können Maschinenbewegungskommandos und Maschinenzustandsänderungskommandos in der gewünschten Reihenfolge zusammengestellt werden. Ganz allgemein kann gesagt werden, dass eine Phase des Hochfahrens bzw. eine Phase des Herunterfahrens durch eine Sequenz an Kommandos gebildet wird. Dabei werden Maschinenbewegungskommandos und/oder Maschinenzustandsänderungskommandos zu einer Sequenz zusammengestellt. Beim Starten einer Phase wird die zu dieser Phase vorprogrammierte Sequenz an Kommandos von der Maschinensteuerung abgefahren, die zu den Kommandos gehörenden Funktionen ausgelöst und dabei die Spritzgießmaschine von einem Betriebszustand zu Beginn der Phase in einen Betriebszustand am Ende der Phase gebracht.

Anstelle der Betätigung einzelner Maschinenbewegungstasten und/oder einzelner Maschinenzustandsänderungstasten werden Maschinenbewegungskommandos und/oder Maschinenzustandsänderungskommandos zu einer Sequenz zusammengefasst und ein hierzu gehöriger Ablauf programmiert, der ausgelöst wird, wenn ein Bedienelement bzw. eine Taste des Hochfahrens bzw. des Herunterfahrens betätigt wird. Ein Maschinenbediener braucht somit lediglich eine Taste des Hochfahrens bzw. des Herunterfahrens zu betätigen und die hierzu gehörenden Funktion laufen automatisch ab. Die Bedienperson muss also nicht die einzelnen Maschinenbewegungstasten und Maschinenzustandsänderungstasten betätigen, sondern lediglich eine Hochfahr-Taste oder eine Herunterfahr-Taste.

Bei den oben genannten Phasen bilden die zwischen den Symbolen 50 und 51 liegenden Maschinenbewegungskommandos und Maschinenzustandsänderungskommandos beispielhaft jeweils eine für eine Phase charakteristische Sequenz.

Gemäß einer Ausführungsform der Erfindung kann genau eine Hochfahr-Taste vorgesehen sein, die derart ausgebildet bzw. programmiert ist, dass durch wiederholtes Betätigen dieser Hochfahr-Taste die jeweils als nächstes zur Verfügung stehende Phase des Hochfahrens gestartet werden kann.

Ebenso kann genau eine Herunterfahr-Taste vorgesehen sein, die derart ausgebildet bzw. programmiert ist, dass durch wiederholtes Betätigen dieser Herunterfahr-Taste die jeweils als nächstes zur Verfügung stehende Phase des Herunterfahrens gestartet werden kann.

Im einfachsten Fall gibt es somit lediglich eine Taste zum Hochfahren der Spritzgießmaschine (Hochfahr-Taste) und eine Taste zum Herunterfahren der Spritzgießmaschine (Herunterfahr-Taste), die durch mehrmaliges Betätigen ein Starten und Abarbeiten der jeweiligen Phasen und der hierzu vorprogrammierten Sequenzen an Maschinenbewegungskommandos und Maschinenzustandsänderungskommandos bewirkt.

Es können aber auch mehrere Hochfahr- bzw. Herunterfahr-Tasten vorgesehen sein, die so gekennzeichnet sind, dass sie zu der Phase gehören, die ausgelöst und abgefahren werden soll. Dabei kann eine Anordnung dieser Tasten nebeneinander, untereinander, übereinander oder in sonstiger Weise vorgesehen sein. Es muss lediglich leicht erkennbar sein, welche Taste zu welcher Phase gehört. Auch kann ein Drehknopf als Bedienelement vorgesehen sein, der entweder weiter gedreht wird, um von einer Phase zur nächsten Phase zu gelangen oder auf den mehrmals gedrückt werden kann. Grundsätzlich ist jedes Bedienelement als Hochfahr-Taste bzw. als Herunterfahr-Taste vorstellbar, bei dessen Betätigung der Ablauf einer Phase und der hierzu vorprogrammierten Sequenz gestartet bzw. ausgelöst werden kann.

Gegebenenfalls können zusätzliche Hochfahr- und/oder Herunterfahr-Tasten vorgesehen sein, bei deren Betätigung ein vorgegebener Zwischenzustand angefahren werden kann. Beispielsweise kann eine zusätzliche Hochfahr-Taste vorgesehen sein, um die Spritzgießmaschine vom ausgeschalteten Zustand in den Standby-Zustand zu bringen. Analog hierzu kann eine zusätzliche Herunterfahr-Taste vorgesehen sein, um die Spritzgießmaschine vom eingeschalteten Zustand in den Standby-Zustand herunterzufahren.

Gemäß einer weiteren Ausführungsform der Erfindung kann die Hochfahr-Taste mit einem nach oben weisenden Pfeil versehen sein oder ein solcher Pfeil kann der Hochfahr-Taste zugeordnet sein. Zusätzlich oder alternativ dazu kann die Hochfahr-Taste farblich gestaltet oder beleuchtbar sein, vorzugsweise in grüner Farbe. Ferner kann die Herunterfahr-Taste mit einem nach unten weisenden Pfeil versehen sein oder ein solcher Pfeil kann der Herunterfahr-Taste zugeordnet sein. Zusätzlich oder alternativ dazu kann die Herunterfahr-Taste farblich gestaltet oder beleuchtbar sein, vorzugsweise in roter Farbe. Gemäß einer bevorzugten Ausführungsform können die Tasten zum Hochfahren und zum Herunterfahren der Spritzgießmaschine nach einem Ampelsystem gestaltet und mit den vorstehend genannten Farben "grün" zum Hochfahren und "rot" zum Herunterfahren ausgebildet sein.

Gemäß einer weiteren Ausführungsform können für das Hochfahren der Spritzgießmaschine drei Phasen und/oder für das Herunterfahren der Spritzgießmaschine drei Phasen vorgesehen sein, wobei vorzugsweise sowohl für das Hochfahren als auch für das Herunterfahren jeweils drei Phasen vorgesehen sind. Demzufolge kann ausgehend von einem ausgeschalteten Zustand der Spritzgießmaschine durch dreimaliges Betätigen der Hochfahr-Taste der Zustand des - in der Regel vollautomatischen - Produktionsbetriebs zur Herstellung von spritzgegossenen Formteilen angefahren werden. Ebenso kann ausgehend vom Produktionsbetrieb durch dreimaliges Betätigen der Herunterfahr-Taste die Spritzgießmaschine in den ausgeschalteten Zustand gebracht werden.

Vorzugsweise ist die Bedieneinheit derart eingerichtet, dass nur diejenigen Tasten zum Hochfahren oder Herunterfahren der Spritzgießmaschine beleuchtet sind, die zur Verfügung stehen. Beim Hochfahren der Spritzgießmaschine sind somit die Herunterfahr-Tasten unbeleuchtet und beim Herunterfahren der Spritzgießmaschine sind die Hochfahr-Tasten unbeleuchtet. Ebenso kann die Bedieneinheit derart eingerichtet sein, dass eine Hochfahr-Taste nur dann wieder betätigt werden kann - und dementsprechend dann erneut aufleuchtet - wenn die zuvor gestartete Phase beendet ist und eine neue Phase des Hochfahrens gestartet werden kann. Dies kann ebenso für die Herunterfahr-Taste in dieser Weise eingerichtet sein.

Die Bedienung der Spritzgießmaschine in der Produktion kann ausschließlich über die oben genannten Bedienelemente bzw. Tasten für das Hochfahren und das Herunterfahren der Spritzgießmaschine erfolgen. Die restlichen Bedienelemente der Bedieneinheit müssen von der Bedienperson in der Produktion nicht mehr verwendet werden.

In einer Weiterbildung der Erfindung kann vorgesehen sein, dass beim Ablaufen der Phasen oder zwischen den einzelnen Phasen eine Anzeige generiert wird, die eine Bedienperson dazu veranlasst, eine bestimmte Tätigkeit auszuführen. Beispielsweise kann auf manuelle Tätigkeiten aufmerksam gemacht werden, welche zu einem bestimmten Zeitpunkt ausgeführt werden müssen. Hierzu kann vorgesehen sein, dass ein Anwendungstechniker hierzu passende Befehle bzw. Kommandos in den Ablauf einbaut. Zusätzlich zu den o.g. Maschinenbewegungskommandos und den Maschinenzustandsänderungskommandos können somit Kommandos vorgesehen sein, die einer Sequenz hinzugefügt werden können und welche von einem Anwendungstechniker programmiert oder programmierbar sind, derart, dass beim Hochfahren und/oder Herunterfahren der Spritzgießmaschine zu vorgebbaren Zeitpunkten eine Anzeige an der Bedieneinheit erzeugbar ist, die einer Bedienpersonen eine oder mehrere Handlungsanweisungen anzeigt. Sobald die Bedienperson die angezeigte Tätigkeit ausgeführt hat, kann sie dies durch Betätigen einer entsprechenden Bestätigungstaste auf der Bedieneinheit bestätigen. Sowohl der Titeltext als auch die Anweisungsbeschreibung können vom Anwendungstechniker im Ablaufeditor eingegeben werden.

Nachfolgend soll die Erfindung anhand eines Ausführungsbeispiels näher beschrieben werden. Es zeigen:
- Figur 1: Einteilung des Hoch- und Herunterfahrens in drei Phasen
- Figur 2: Bedieneinheit mit Zusatz-Bedienfeld gemäß einer ersten Ausführungsform
- Figur 3: Ablaufeditor
- Figur 4: Hochfahren und Herunterfahren mit jeweils einer Taste
- Figur 5: erste Ausführungsform eines Zusatz-Bedienfeldes
- Figur 6: zweite Ausführungsform eines Zusatz-Bedienfeldes
- Figur 7: dritte Ausführungsform eines Zusatz-Bedienfeldes
- Figur 8: Anweisung an eine Bedienperson
- Figur 9: Editor für Anwendungstechniker zur Programmierung der Anweisung gemäß der Figur 8

Die Figur 1 ist bereits oben im Zusammenhang mit der Darstellung der Erfindung erläutert worden, so dass an dieser Stelle auf eine Wiederholung verzichtet werden kann.

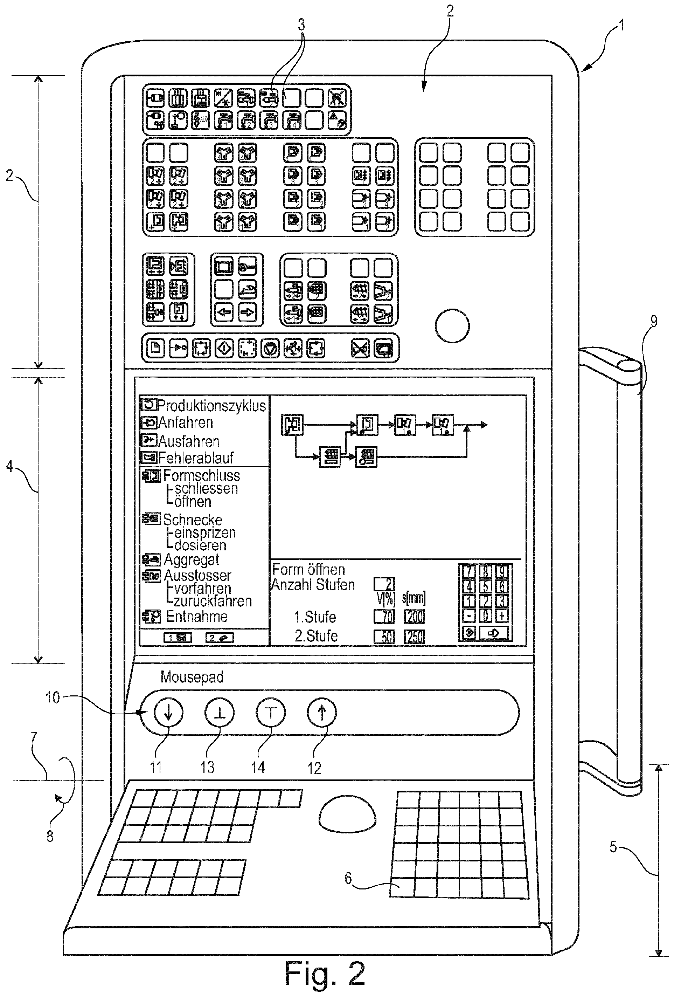

Die Figur 2 zeigt eine insgesamt mit dem Bezugszeichen 1 gekennzeichnete Bedieneinheit wie sie beispielsweise aus der eingangs genannten EP2100197B1 bekannt ist. Der oberste Sektor zeigt ein oberstes Bedienfeld 2 mit einer großen Anzahl mechanischer Tasten 3. Dabei handelt es sich um Maschinenbewegungstasten und um Maschinenzustandsänderungstasten mit Symbolen wie oben erläutert. Der mittlere Sektor ist ein Bildschirm 4, auf welchem beliebige Darstellungen und Prozessabläufe aufgerufen und angezeigt werden können. Der Aufruf erfolgt durch Tasten 6 des untersten Bedienfeldes 5. Das Bedienfeld 5 ist über eine horizontale Achse 7 auf- und abklappbar (siehe Pfeil 8). Mittels eines Handgriffs 9 kann die gesamte Bedieneinheit 1 in der Höhe verstellt und/oder um die Hochachse gedreht werden. Mit Hilfe der Tasten 6 und dem Bildschirm 4 kann eine Ablaufprogrammierung eines Spritzgießzyklus vorgenommen werden. In gleicher Weise können einzelne Sequenzen des Hochfahrens und des Herunterfahrens der Spritzgießmaschine programmiert werden. Sowohl bei der Ablaufprogrammierung als auch bei der Programmierung einzelner Sequenzen werden auf dem Bildschirm 4 Maschinenbewegungskommandos und Maschinenzustandsänderungskommandos angezeigt und zu einer Sequenz zusammengestellt. Die Funktionen der einzelnen Kommandos sind durch Symbole gekennzeichnet, wie sie oben beschrieben worden sind.

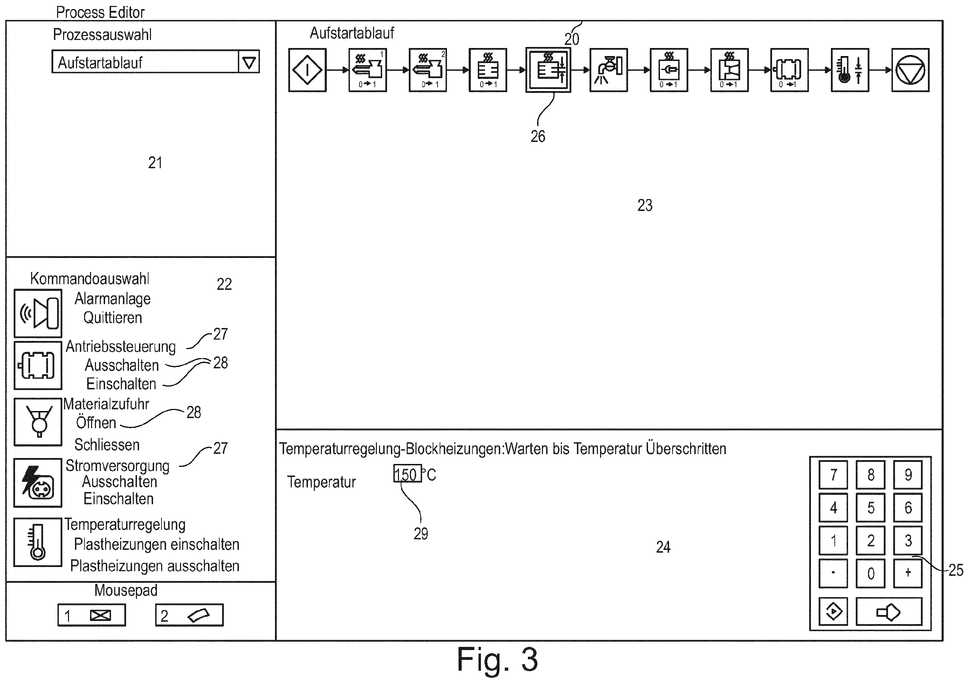

Die Figur 3 zeigt einen Ablaufeditor 20, mit dem einzelne Sequenzen des Hochfahrens und des Herunterfahrens der Spritzgießmaschine programmiert werden können. In dem Ablaufeditor können - insbesondere von einem Anwendungstechniker - die einzelnen Phasen des Hochfahrens und des Herunterfahrens programmiert werden. Hierzu wird für jede Phase eine Abfolge von Maschinenbewegungskommandos und/oder Maschinenzustandsänderungskommandos zu einer Sequenz an Kommandos zusammengestellt. Dies soll anhand der Phase 1 des Hochfahrens näher erläutert werden. In der Prozessauswahl 21 kann die zu bearbeitende Phase gewählt werden, im gegebenen Fall ist dies der Aufstartablauf. Abhängig von der gewählten Sequenz wird die Kommandoauswahl 22 mit den für diese Phase verfügbaren Komponenten und Kommandos angezeigt. Im eigentlichen Ablaufbereich 23 wird die aktuelle Sequenz angezeigt, wobei jeweils ein Kommando 26 selektiert werden kann. Das selektierte Kommando wird auf geeignete Weise hervorgehoben. Die zugehörende Parametrierung des selektierten Kommandos wird im Parametrierbereich 24 angezeigt. Je nach selektiertem Kommando unterscheidet sich Anzahl und Art der veränderbaren Parameter. Der fokussierte Parameter 29 kann je nach Ausprägung mittels Softkeyboard 25 oder über eine zusätzliche Hardwaretastatur verändert werden.

Bei der dargestellten Sequenz werden alle Kommandos sequenziell nacheinander ausgeführt. Die Gestaltung des Ablaufs ist jedoch keinesfalls auf eine rein sequenzielle Modellierung beschränkt. Wo dies Sinn macht können auch parallele Teilsequenzen modelliert werden.

Erfindungsgemäß ist die Bedieneinheit 1 mit einem Zusatz-Bedienfeld 10 ausgestattet (siehe Figur 2), in welchem bis zu vier Tasten vorhanden sind. Diese Tasten können als Hardware-Tasten ausgebildet sein. Es sind eine erste Taste 11 als Herunterfahr-Taste und eine zweite Taste 12 als Hochfahrfahr-Taste vorgesehen. Die Hochfahr-Taste kann wie dargestellt mit einem nach oben weisenden Pfeil markiert sein. Entsprechend kann die Herunterfahr-Taste mit einem nach unten weisenden Pfeil markiert sein. Ferner gibt es noch zwei weitere Tasten 13 und 14, die im Bedarfsfalle zum Anfahren von Zwischenzuständen zur Verfügung stehen. Die Taste 13 ist mit einem auf dem Kopf stehenden Buchstaben "T" markiert und die Taste 14 mit einem aufrecht stehenden Buchstaben "T". Die Hochfahr-Taste 12 kann grün beleuchtbar oder einfach nur als grüne Taste ausgebildet ein. Die Herunterfahr-Taste 11 kann rot beleuchtbar oder einfach nur als rote Taste ausgebildet sein. Bei einer farblichen Kennzeichnung kann auf die Pfeile auf den Tasten 11 und 12 verzichtet werden. Ebenso können die zusätzlichen Tasten 13 und 14 in geeigneter Weise farblich beleuchtet oder farblich ausgebildet sein.

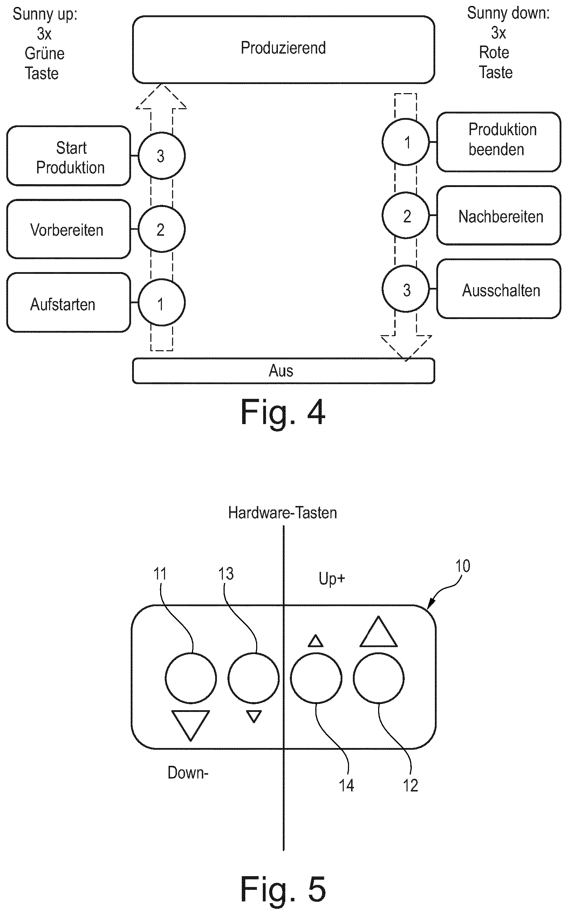

Die Hochfahr-Taste 12 ist in der Weise programmiert, dass durch wiederholtes Betätigen dieser Hochfahr-Taste 12 die jeweils als nächstes zur Verfügung stehende Phase des Hochfahrens gestartet werden kann. Ebenso ist die Herunterfahr-Taste 11 in der Weise programmiert, dass durch wiederholtes Betätigen dieser Herunterfahr-Taste die jeweils als nächstes zur Verfügung stehende Phase des Herunterfahrens gestartet werden kann. Wie in der Figur 4 dargestellt, kann somit ausgehend vom Zustand Nr.1 = "AUS" (OFF) durch dreimaliges Betätigen der Hochfahr-Taste 12 die Spritzgießmaschine in den Produktionsbetrieb entsprechend dem Zustand Nr.4 hochgefahren werden. Ebenso kann durch dreimaliges Betätigen der Herunterfahr-Taste 11 die Spritzgießmaschine aus dem Produktionsbetrieb zurück in den Zustand Nr.1 heruntergefahren werden.

Durch Betätigung der Hochfahr-Taste 12 wird eine Phase des Hochfahrens gestartet und dabei eine für diese Phase des Hochfahrens vorgegebene Sequenz an bestimmten Maschinenbewegungskommandos und/oder Maschinenzustandsänderungskommandos aktiviert und die zugeordneten Funktionen ausgelöst. Entsprechend wird durch Betätigung der Herunterfahr-Taste 11 eine Phase des Herunterfahrens ausgelöst und dabei eine für diese Phase des Herunterfahrens vorgegebene Sequenz an bestimmten Maschinenbewegungskommandos und/oder Maschinenzustandsänderungskommandos aktiviert und die zugeordneten Funktionen ausgelöst werden.

In der Figur 5 ist das Zusatz-Bedienfeld 10 gemäß einer weiteren Ausführungsform dargestellt. Zusätzlich zu den Tasten 11 und 12 zum Hochfahren bzw. zum Herunterfahren der Spritzgießmaschine sind eine zusätzliche Herunterfahr-Taste 13 und eine zusätzliche Hochfahr-Taste 14 vorgesehen. Diese Tasten 13 und 14 sind derart programmiert, dass bei deren Betätigung ein vorgegebener Zwischenzustand angefahren wird.

Die zusätzlichen Tasten 13 und 14 können eine Beschriftung aufweisen wie oben im Zusammenhang mit der Figur 2 beschrieben. Es kann aber auch eine farbliche Kennzeichnung vorgesehen sein. Beispielsweise kann die zusätzliche Hochfahr-Taste 14 blau beleuchtet oder einfach nur als blaue Taste ausgebildet sein. Die zusätzliche Herunterfahr-Taste 13 kann gelb beleuchtet oder einfach nur als gelbe Taste ausgebildet sein. Die beiden zusätzlichen Tasten 13 und 14 können dazu verwendet werden, um andere Zustände zu erreichen (z.B. den Zwischenzustand "Standby") oder um eine alternative Nachbereitung durchzuführen. Die Verfügbarkeit der zusätzlichen Tasten 13 und 14 ist im Gegensatz zu den Tasten 11 und 12 durch den Anwendungstechniker konfigurierbar. Bei laufender Produktion können die Tasten 13 und 14 beispielsweise dazu verwendet werden, eine Variante des Produktionsablaufs auszuführen, z.B. um eine Stichprobenentnahme durch den Bediener auszulösen, was einen leicht variierten Produktionsablauf zur Folge hat.

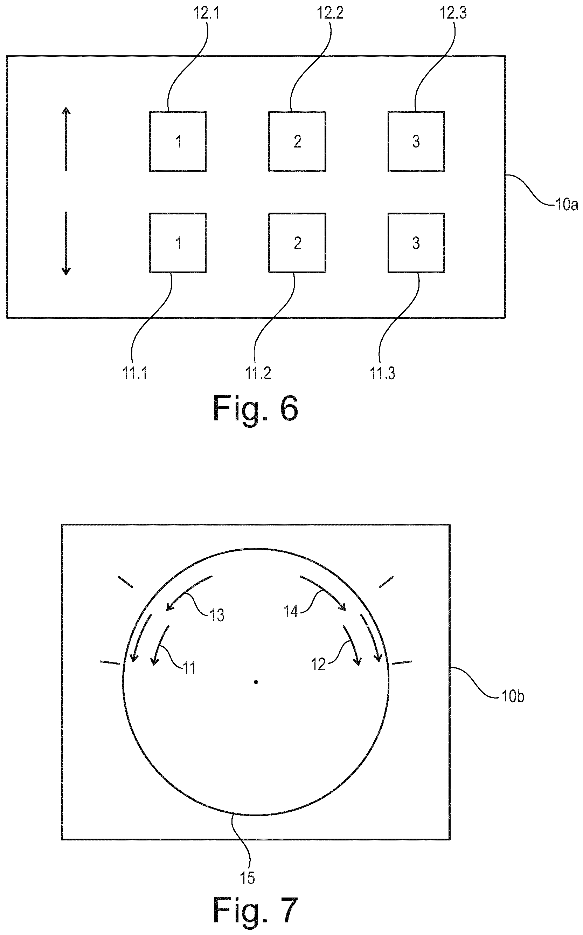

Die Figur 6 zeigt eine zweite Ausführungsform eines zusätzlichen Bedienfeldes 10a mit Bedienelementen für das Hoch- und das Herunterfahren der Spritzgießmaschine. Gemäß dieser Variante sind drei Hochfahr-Tasten 12.1 bis 12.3 und drei Herunterfahr-Tasten 11.1 bis 11.3 vorgesehen, die mit einer Beschriftung der auszulösenden Phase versehen sind. Demgemäß wird beim Betätigen der Hochfahr-Taste 12.1 die erste Phase des Hochfahrens ausgelöst. Nach deren Ende wird durch Betätigen der Hochfahr-Taste 12.2 die zweite Phase des Hochfahrens ausgelöst und danach durch Betätigen der Hochfahr-Taste 12.3 die dritte Phase des Hochfahrens. Analog können die Herunterfahr-Tasten zum Auslösen der Phasen des Herunterfahrens betätigt werden. Neben den Tasten kann eine Kennzeichnung für die Bedeutung der Tasten vorgesehen sein; vorliegend sind ein aufwärts zeigender Pfeil für die Hochfahr-Tasten 12.1 bis 12.3 und ein nach unten zeigender Pfeil für die Herunterfahr-Tasten 11.1 bis 11.3 vorgesehen. Die Tasten können gegebenenfalls in geeigneter Weise beleuchtet sein.

Die Figur 7 zeigt eine dritte Ausführungsform eines Bedienfeldes 10b mit einem Bedienelement zum Hochfahren und zum Herunterfahren der Spritzgießmaschine. Hierbei ist als Bedienelement ein Drehknopf 15 vorgesehen. Dieser kann beispielsweise in der Weise ausgebildet und programmiert sein, dass bei einer Drehung im Uhrzeigersinn die Phasen P1 bis P3 des Hochfahrens und bei einer Drehung gegen den Uhrzeigersinn die Phasen P1 bis P3 des Herunterfahrens ausgelöst werden. Eine Drehbewegung mit kleinem Ausschlag (je nach Ausprägung auch mit Rastfunktion) entspricht den Tasten 13 und 14, eine Drehbewegung mit stärkerem Ausschlag entspricht hingegen den Tasten 11 und 12.

Der Wechsel zwischen den Zuständen der Maschine und damit das Starten und Abarbeiten der einzelnen Phasen bzw. das Aktivieren der hierzu vorprogrammierten Sequenzen wird über die vier Tasten 11, 12, 13 und 14 des Zusatz-Bedienfelds 10 gesteuert, wobei vorzugsweise jeweils nur die verfügbaren Tasten beleuchtet sind. Bei jedem Wechsel von einem Zustand in einen anderen wird ein Maschinenablauf gestartet, welcher die auszuführenden Arbeitsschritte abbildet. Dabei wird die zu einer Phase gehörige Sequenz an Maschinenbewegungskommandos und an Maschinenzustandsänderungskommandos gemäß einer vorprogrammierten Abfolge im Hintergrund ausgeführt. In welcher Abfolge die einzelnen Arbeitsschritte ausgeführt werden, d.h. wie eine Sequenz an Maschinenbewegungskommandos und an Maschinenzustandsänderungskommandos zusammengestellt und betätigt wird, kann vom Anwendungstechniker frei definiert werden. Vorzugsweise ist der Ablaufeditor, mit welchem der Anwendungstechniker die Reihenfolge der Maschinenbewegungskommandos und Maschinenzustandsänderungskommandos für eine Sequenz festlegt so ausgestaltet, dass immer nur die für den jeweiligen Ablauf einer Phase sinnvollen Kommandos angeboten werden. So sind zum Beispiel im Ablauf für das Einschalten der Maschine (Phase 1, d.h. Wechsel vom Zustand Nr.1 "Ausgeschaltet" in den Zustand Nr.2 "Eingeschaltet") keine Kommandos erlaubt, welche eine Bewegung der Maschine auslösen. Entsprechend werden Maschinenbewegungskommandos, deren Funktion die Auslösung von Fahrbewegungen (z.B. Schliessen der Form) bewirkt, nicht angeboten oder nicht aktiv geschaltet.

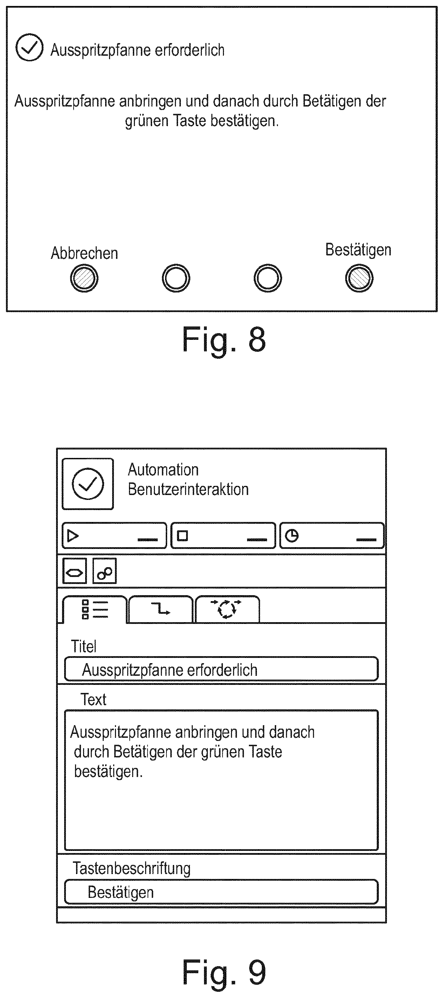

In einer Weiterbildung der Erfindung kann vorgesehen sein, dass beim Ablaufen der Phasen oder zwischen den einzelnen Phasen eine Anzeige generiert wird, die eine Bedienperson dazu veranlasst, eine bestimmte Tätigkeit auszuführen. Beispielsweise kann auf manuelle Tätigkeiten aufmerksam gemacht werden, welche zu einem bestimmten Zeitpunkt ausgeführt werden müssen. Hierzu kann vorgesehen sein, dass ein Anwendungstechniker hierzu passende Befehle bzw. Kommandos in den Ablauf einbaut. Zusätzlich zu den o.g. Maschinenbewegungskommandos und den Maschinenzustandsänderungskommandos können somit Kommandos vorgesehen sein, die einer Sequenz hinzugefügt werden. Sobald die Bedienperson die angezeigte Tätigkeit ausgeführt hat, kann sie dies durch Betätigen einer entsprechenden Bestätigungstaste auf der Bedieneinheit bestätigen. Sowohl der Titeltext als auch die Anweisungsbeschreibung können vom Anwendungstechniker im Ablaufeditor eingegeben werden. Die Figur 8 zeigt beispielhaft eine Anzeige in Form eines Fensters, welches auf einem Display der Bedieneinheit angezeigt wird. In dem hier gezeigten Beispiel geht es um eine manuelle Tätigkeit im Vorfeld des Ausspritzens (entsprechend der Taste 54), welches in der Phase P2 des Hochfahrens vorgesehen ist. Die Figur 9 zeigt beispielhaft eine Anzeige an der Bedieneinheit, mit welcher ein Anwendungstechniker eine Interaktion einer Bedienperson definieren kann. Die vom Anwendungstechniker vorgenommene Definition wird in der Darstellung gemäß der Figur 8 einer Bedienperson zur Anzeige gebracht und zwar dann, wenn beim Hochfahren der Spritzgießmaschine in der Phase P2 als nächster Schritt das Ausspritzen stattfinden soll.

Je nach Anwendung ist es wichtig, dass der aufdosierte Kunststoff nicht zu lange aufgeheizt in der Plastifizierung verbleibt. Überwachungen, welche vom Anwendungstechniker konfiguriert werden können, sorgen dafür, dass das Material automatisch ausgespritzt wird, wenn die Materialverweilzeit überschritten ist. Der Bediener muss sich darum nicht kümmern, da bei erneutem Starten der Produktion wieder automatisch aufdosiert und die Produktion gestartet wird. Dazu gehört auch, dass sämtliche Komponenten wieder ihre jeweilige Startposition einnehmen. Ebenso kann nach einem längeren Stillstand und ohne Bedienerinteraktion die Maschine ausgeschaltet oder in den Bereitschaftszustand gebracht werden. Die dazu nötigen Kommandos bzw. Abläufe sind vom Anwendungstechniker hinterlegt.

### Bezugszeichenliste

- 1: Bedieneinheit
- 2: Erstes Bedienfeld mit Tasten
- 3: Mechanische Tasten im ersten Bedienfeld
- 4: Bildschirm
- 5: Zweites Bedienfeld mit Tasten
- 6: Tasten im zweiten Bedienfeld
- 7: Horizontale Drehachse
- 8: Drehrichtung
- 9: Handgriff
- 10: Zusatz-Bedienfeld - erste Ausführungsform
- 10a: Zusatz-Bedienfeld - zweite Ausführungsform
- 10b: Zusatz-Bedienfeld - dritte Ausführungsform
- 10: Zusatz-Bedienfeld
- 11: Herunterfahr-Tasten
- 11.1 - 11.3: Herunterfahr-Tasten - zweite Ausführungsform
- 12: Hochfahr-Taste
- 12.1 - 12.3: Hochfahr-Tasten - zweite Ausführungsform
- 13: Zusätzliche Herunterfahr-Taste
- 14: Zusätzliche Hochfahr-Taste
- 15: Drehknopf
- 20: Ablaufeditor
- 21: Prozessauswahl 21
- 22: Kommandoauswahl 22
- 23: Ablaufbereich 23
- 24: Parametrierbereich 24
- 25: Softkeyboard 25
- 26: Kommando
- 27: Kommando
- 28: Kommando
- 29: Parameter

## Patentansprüche

1. Spritzgießmaschine mit einer Maschinensteuerung und mit einer Bedieneinheit (1), ausgebildet als Mensch-Maschine-Interface, wobei die Bedieneinheit (1) ausgebildet ist, um die Spritzgießmaschine aus einem ausgeschalteten Zustand oder aus einem Standby-Zustand in einen Produktionsbetrieb zur Herstellung von spritzgegossenen Formteilen hochfahren und aus dem Produktionsbetrieb zurück in einen ausgeschalteten oder einen Standby-Zustand herunterfahren zu können,
**dadurch gekennzeichnet, dass**
das Hochfahren der Spritzgießmaschine und das Herunterfahren der Spritzgießmaschine jeweils in mehrere Phasen eingeteilt ist, dass für jede Phase des Hochfahrens und für jede Phase des Herunterfahrens eine Sequenz an bestimmten Maschinenbewegungskommandos und/oder bestimmten Maschinenzustandsänderungskommandos vorprogrammiert ist, und dass an der Bedieneinheit (1) ein oder mehrere Bedienelemente (11, 11.1, 11.2, 11.3, 12, 12.1, 12.2, 12.3, 13, 14, 15) vorgesehen sind, bei deren Betätigung eine vorprogrammierte Sequenz aktiviert und eine Phase des Hochfahrens oder des Herunterfahrens gestartet werden kann, wobei die den Maschinenbewegungskommandos und/oder den Maschinenzustandsänderungskommandos dieser Sequenz zugeordneten Funktionen des Hochfahrens oder des Herunterfahrens der Spritzgießmaschine ausgelöst werden.

2. Spritzgießmaschine nach Anspruch 1,
**dadurch gekennzeichnet, dass**
ein als Hochfahr-Taste (12, 12.1, 12.2, 12.3, 14) ausgebildetes Bedienelement zum Hochfahren der Spritzgießmaschine und ein als Herunterfahr-Taste (11, 11.1, 11.2, 11.3, 13) ausgebildetes Bedienelement zum Herunterfahren der Spritzgießmaschine vorgesehen sind.

3. Spritzgießmaschine nach einem der vorstehenden Ansprüche,
**dadurch gekennzeichnet, dass**
genau ein Bedienelement als Hochfahr-Taste (12) vorgesehen ist, die derart programmiert ist, dass durch wiederholtes Betätigen dieser Hochfahr-Taste die jeweils als nächstes zur Verfügung stehende Phase des Hochfahrens gestartet werden kann.

4. Spritzgießmaschine nach einem der vorstehenden Ansprüche,
**dadurch gekennzeichnet, dass**
genau ein Bedienelement als Herunterfahr-Taste (11) vorgesehen ist, die derart programmiert ist, dass durch wiederholtes Betätigen dieser Herunterfahr-Taste die jeweils als nächstes zur Verfügung stehende Phase des Herunterfahrens gestartet werden kann.

5. Spritzgießmaschine nach einem der vorstehenden Ansprüche,
**dadurch gekennzeichnet, dass**
zusätzliche Hochfahr- und/oder Herunterfahr-Tasten (14, 13) vorgesehen sind, bei deren Betätigung ein vorgegebener Zwischenzustand angefahren werden kann.

6. Spritzgießmaschine nach einem der vorstehenden Ansprüche,
**dadurch gekennzeichnet, dass**
als Bedienelement eine Hochfahr-Taste (12.1, 12.2, 12.3) mit einem nach oben weisenden Pfeil vorgesehen ist oder ein solcher Pfeil der Hochfahr-Taste zugeordnet ist und/oder dass die Hochfahr-Taste farblich gestaltet oder beleuchtbar ist, vorzugsweise in grüner Farbe.

7. Spritzgießmaschine nach einem der vorstehenden Ansprüche,
**dadurch gekennzeichnet, dass**
als Bedienelement eine Herunterfahr-Taste (11.1, 11.2, 11.3) mit einem nach unten weisenden Pfeil vorgesehen ist oder ein solcher Pfeil der Herunterfahr-Taste zugeordnet ist und/oder dass die Herunterfahr-Taste farblich gestaltet oder beleuchtbar ist, vorzugsweise in roter Farbe.

8. Spritzgießmaschine nach einem der Ansprüche 1, 2, 5, 6 oder 7,
**dadurch gekennzeichnet, dass**
mehrere Hochfahr-Tasten und/oder mehrere Herunterfahr-Tasten vorgesehen sind.

9. Spritzgießmaschine nach Anspruch 1,
**dadurch gekennzeichnet, dass**
ein Drehknopf (15) als Bedienelement vorgesehen ist, dessen Betätigung durch eine Drehung des Drehknopf bewirkt werden kann, wobei bei Drehung in die eine Richtung eine vorprogrammierte Sequenz des Hochfahrens und bei Drehung in die entgegengesetzte Richtung eine vorprogrammierte Sequenz des Herunterfahrens gestartet werden kann.

10. Spritzgießmaschine nach einem der vorstehenden Ansprüche,
**dadurch gekennzeichnet, dass**
für das Hochfahren der Spritzgießmaschine drei Phasen vorgesehen sind und/oder dass für das Herunterfahren der Spritzgießmaschine drei Phasen vorgesehen sind.

11. Spritzgießmaschine nach einem der vorstehenden Ansprüche,
**dadurch gekennzeichnet, dass**
diejenigen Bedienelemente zum Hochfahren oder zum Herunterfahren der Spritzgießmaschine beleuchtet sind, die im jeweiligen Zustand der Spritzgießmaschine gerade zur Verfügung stehen.

12. Spritzgießmaschine nach einem der vorstehenden Ansprüche,
**dadurch gekennzeichnet, dass**
Befehlstasten vorgesehen sind, welche von einem Anwendungstechniker programmiert oder programmierbar sind, derart, dass beim Hochfahren und/oder Herunterfahren des Spritzgießmaschine zu vorgebbaren Zeitpunkten eine Anzeige an der Bedieneinheit erzeugbar ist, die einer Bedienpersonen eine oder mehrere Handlungsanweisungen anzeigt.

13. Computerprogrammprodukt, umfassend mehrere programmierte Sequenzen an Maschinenbewegungskommandos einer Spritzgießmaschine und/oder Maschinenzustandsänderungskommandos einer Spritzgießmaschine, wobei die Kommandos bei ihrer Ausführung bewirken, dass die Spritzgießmaschine aus einem ausgeschalteten Zustand oder aus einem Standby-Zustand in einen Produktionsbetrieb zur Herstellung von spritzgegossenen Formteilen hochgefahren und aus dem Produktionsbetrieb zurück in einen ausgeschalteten oder einen Standby-Zustand heruntergefahren wird, **dadurch gekennzeichnet, dass** das Hochfahren der Spritzgießmaschine und das Herunterfahren der Spritzgießmaschine jeweils in mehrere Phasen eingeteilt ist, und wobei für jede Phase des Hochfahrens und für jede Phase des Herunterfahrens eine Sequenz an bestimmten Maschinenbewegungskommandos und/oder bestimmten Maschinenzustandsänderungskommandos vorprogrammiert ist, und dass an der Bedieneinheit (1) ein oder mehrere Bedienelemente (11, 11.1, 11.2, 11.3, 12, 12.1, 12.2, 12.3, 13, 14, 15) vorgesehen sind, bei deren Betätigung eine vorprogrammierte Sequenz aktiviert und eine Phase des Hochfahrens oder des Herunterfahrens gestartet werden kann, wobei die den Maschinenbewegungskommandos und/oder den Maschinenzustandsänderungskommandos dieser Sequenz zugeordneten Funktionen des Hochfahrens oder des Herunterfahrens der Spritzgießmaschine ausgelöst werden.

14. Computerprogrammprodukt nach Anspruch 13,
**dadurch gekennzeichnet, dass**
eine erste Abfolge von Sequenzen für das Hochfahren und/oder zweite eine Abfolge von Sequenzen für das Herunterfahren jeweils zu einem (ersten) Gesamtprogramm des Hochfahrens und/oder zu einem (zweiten) Gesamtprogramm des Herunterfahrens zusammengefasst sind.

15. Computerlesbares Medium, auf dem das Computerprogrammprodukt nach Anspruch 13 oder 14 gespeichert ist.

## Claims

1. An injection molding machine comprising a machine control and an operating unit (1), designed as a human-machine interface, wherein the operating unit (1) is designed to start up the injection molding machine from a turned-off state or a standby state into production mode for manufacturing injection-molded parts and to shut it down from production mode back to a turned-off or standby state,
**characterized in that**
the startup of the injection molding machine and the shutdown of the injection molding machine are each divided into several phases, that for each phase of the startup and for each phase of the shutdown, a sequence of specific machine movement commands and/or specific machine state change commands is preprogrammed, and that the operating unit (1) is equipped with one or more operating elements (11, 11.1, 11.2, 11.3, 12, 12.1, 12.2, 12.3, 13, 14, 15), the actuation of which activates a preprogrammed sequence and allows a phase of startup or shutdown to be initiated, whereby the functions of the startup or shutdown of the injection molding machine associated with the machine movement commands and/or the machine state change commands of this sequence are triggered.

2. The injection molding machine according to claim 1,
**characterized in that**
an operating element configured as a startup button (12, 12.1, 12.2, 12.3, 14) for starting up the injection molding machine and an operating element configured as a shutdown button (11, 11.1, 11.2, 11.3, 13) for shutting down the injection molding machine are provided.

3. The injection molding machine according to one of the preceding claims,
**characterized in that**
exactly one operating element is provided as a startup button (12), which is programmed such that repeated actuation of this startup button starts the next available phase of the startup process.

4. The injection molding machine according to one of the preceding claims,
**characterized in that**
exactly one operating element is provided as a shutdown button (11), which is programmed such that repeated actuation of this shutdown button starts the next available phase of the shutdown process.

5. The injection molding machine according to one of the preceding claims,
**characterized in that**
additional startup and/or shutdown buttons (14, 13) are provided, the actuation of which allows a predetermined intermediate state to be reached.

6. The injection molding machine according to one of the preceding claims,
**characterized in that**
a startup button (12.1, 12.2, 12.3) with an upward-pointing arrow is provided as an operating element, or such an arrow is associated with the startup button, and/or that the startup button is color-coded or illuminable, preferably in green.

7. The injection molding machine according to one of the preceding claims,
**characterized in that**
a shutdown button (11.1, 11.2, 11.3) with a downward-pointing arrow is provided as an operating element, or such an arrow is associated with the shutdown button, and/or that the shutdown button is color-coded or illuminable, preferably in red.

8. The injection molding machine according to one of claims 1, 2, 5, 6, or 7,
**characterized in that**
multiple startup buttons and/or multiple shutdown buttons are provided.

9. The injection molding machine according to claim 1,
**characterized in that**
a rotary knob (15) is provided as an operating element, which can be actuated by rotating the rotary knob, wherein rotation in one direction starts a preprogrammed startup sequence and rotation in the opposite direction starts a preprogrammed shutdown sequence.

10. The injection molding machine according to one of the preceding claims,
**characterized in that**
three phases are provided for the startup of the injection molding machine and/or that three phases are provided for the shutdown of the injection molding machine.

11. The injection molding machine according to one of the preceding claims,
**characterized in that**
those operating elements for startup or shutdown of the injection molding machine are illuminated which are currently available in the respective state of the injection molding machine.

12. The injection molding machine according to one of the preceding claims,
**characterized in that**
command buttons are provided which are programmed or programmable by an application engineer such that, during startup and/or shutdown of the injection molding machine, a display can be generated on the operating unit at predetermined times, which shows an operator one or more instructions for action.

13. A computer program product comprising several programmed sequences of machine motion commands for an injection molding machine and/or machine state change commands for an injection molding machine, wherein, when executed, the commands cause the injection molding machine to be started up from a turned-off state or a standby state into a production mode for manufacturing injection-molded parts, and to be shut down from the production mode back into a turned-off or standby state,
**characterized in that**
the startup of the injection molding machine and the shutdown of the injection molding machine are each divided into several phases, and wherein a sequence of specific machine movement commands and/or specific machine state change commands is preprogrammed for each phase of the startup and for each phase of the shutdown, and that one or more operating elements (11, 11.1, 11.2, 11.3, 12, 12.1, 12.2, 12.3, 13, 14, 15) are provided on the operating unit (1), the actuation of which activates a preprogrammed sequence and allows a phase of startup or shutdown to be started, whereby the functions of the startup or shutdown of the injection molding machine associated with the machine movement commands and/or the machine state change commands of this sequence are triggered.

14. The computer program product according to claim 13,
**characterized in that**
a first set of sequences for startup and/or a second set of sequences for shutdown are each combined into a (first) overall startup program and/or a (second) overall shutdown program.

15. A computer-readable medium on which the computer program product according to claim 13 or 14 is stored.

## Revendications

1. Machine de moulage par injection avec une commande de machine et avec une unité de commande (1), conçue comme interface homme-machine, dans laquelle l'unité de commande (1) est conçue pour pouvoir mettre en marche la machine de moulage par injection à partir d'un état d'arrêt ou d'un état d'attente dans un mode de production pour la production de pièces moulées par injection et pour pouvoir retourner à partir du mode de production en mode d'arrêt ou d'attente,
**caractérisée en ce que**
la mise en marche de la machine de moulage par injection et l'arrêt de la machine de moulage par injection sont chacun divisés en plusieurs phases, qu'une séquence de certaines commandes de mouvement de la machine et/ou de certaines commandes de changement de mode de la machine est préprogrammée pour chaque phase de la mise en marche et pour chaque phase de l'arrêt, et qu'un ou plusieurs éléments de commande (11, 11.1, 11.2, 11.3, 12, 12.1, 12.2, 12.3, 13, 14, 15) sont prévus au niveau de l'unité de commande (1), dont l'actionnement permet d'activer une séquence préprogrammée et de lancer une phase de mise en marche ou d'arrêt, dans laquelle les fonctions de mise en marche ou d'arrêt de la machine de moulage par injection associées aux commandes de mouvement de la machine et/ou aux commandes de changement de mode de la machine de moulage par injection de cette séquence sont déclenchées.

2. Machine de moulage par injection selon la revendication 1,
**caractérisée en ce que**
un élément de commande formé comme bouton de mise en marche (12, 12.1, 12.2, 12.3, 14) pour la mise en marche de la machine de moulage par injection et un élément de commande formé comme bouton d'arrêt (11, 11.1, 11.2, 11.3, 13) pour l'arrêt de la machine de moulage par injection sont prévus.

3. Machine de moulage par injection selon l'une quelconque des revendications précédentes,
**caractérisée en ce que**
exactement un élément de commande est prévu en tant que bouton de mise en marche (12) qui est programmé de manière à ce qu'un actionnement répété sur ce bouton de mise en marche puisse lancer la phase de mise en marche disponible suivante.

4. Machine de moulage par injection selon l'une quelconque des revendications précédentes,
**caractérisée en ce que**
exactement un élément de commande est prévu comme bouton d'arrêt (11) qui est programmé de manière à ce qu'un actionnement répété sur ce bouton d'arrêt puisse lancer la phase d'arrêt disponible suivante respective.

5. Machine de moulage par injection selon l'une quelconque des revendications précédentes,
**caractérisée en ce que**
des boutons supplémentaires de mise en marche et/ou d'arrêt (14, 13) sont prévus, dont l'actionnement permet d'atteindre un état intermédiaire prédéfini.

6. Machine de moulage par injection selon l'une quelconque des revendications précédentes,
**caractérisée en ce que**
un bouton de mise en marche (12.1, 12.2, 12.3) avec une flèche pointant vers le haut est prévu comme élément de commande ou une telle flèche est affectée au bouton de mise en marche et/ou que le bouton de mise en marche est coloré, ou peut être éclairé, de préférence de couleur verte.

7. Machine de moulage par injection selon l'une quelconque des revendications précédentes,
**caractérisée en ce que**
un bouton d'arrêt (11.1, 11.2, 11.3) avec une flèche pointant vers le bas est prévu comme élément de commande ou une telle flèche est affectée au bouton d'arrêt et/ou que le bouton d'arrêt est coloré, ou peut être éclairé, de préférence de couleur rouge.

8. Machine de moulage par injection selon l'une quelconque des revendications 1, 2, 5, 6 ou 7,
**caractérisée en ce que**
plusieurs boutons de mise en marche et/ou plusieurs boutons d'arrêt sont prévus.

9. Machine de moulage par injection selon la revendication 1,
**caractérisée en ce que**
un bouton rotatif (15) est prévu comme élément de commande, dont l'actionnement peut être effectué par une rotation du bouton rotatif, dans laquelle une rotation dans une direction peut lancer une séquence préprogrammée de mise en marche et une rotation dans la direction opposée une séquence préprogrammée d'arrêt.

10. Machine de moulage par injection selon l'une quelconque des revendications précédentes,
**caractérisée en ce que**
trois phases sont prévues pour la mise en marche de la machine de moulage par injection et/ou **en ce que** trois phases sont prévues pour l'arrêt de la machine de moulage par injection.

11. Machine de moulage par injection selon l'une quelconque des revendications précédentes,
**caractérisée en ce que**
les éléments de commande pour la mise en marche ou l'arrêt de la machine de moulage par injection sont éclairés et justement à disposition dans l'état respectif de la machine de moulage par injection.

12. Machine de moulage par injection selon l'une quelconque des revendications précédentes,
**caractérisée en ce que**
des boutons de commande sont prévus, lesquels sont programmés ou programmables par un technicien d'application de sorte que lors de la mise en marche et/ou de l'arrêt de la machine de moulage par injection, à des moments prédéterminables, un affichage puisse être généré au niveau de l'unité de commande, lequel indique une ou plusieurs instructions d'action à un opérateur.

13. Produit de programme informatique comprenant plusieurs séquences programmées de commandes de mouvement de machine d'une machine de moulage par injection et/ou de commandes de modification de mode de machine d'une machine de moulage par injection, dans lequel les commandes ont pour effet lors de leur exécution que la machine de moulage par injection est mise en marche à partir d'un état d'arrêt ou d'un état d'attente dans un mode de production pour la production de pièces moulées par injection et retournée à partir du mode de production dans un état d'arrêt ou d'attente, **caractérisé en ce que** la mise en marche de la machine de moulage par injection et l'arrêt de la machine de moulage par injection sont chacun divisés en plusieurs phases, et dans lequel pour chaque phase de la mise en marche et pour chaque phase de l'arrêt, une séquence de certaines commandes de mouvement de la machine et/ou certaines commandes de changement d'état de la machine est préprogrammée, et **en ce qu'**un ou plusieurs éléments de commande (11, 11.1, 11.2, 11.3, 12, 12.1, 12.2, 12.3, 13, 14, 15) sont prévus au niveau de l'unité de commande (1), dont l'actionnement permet d'activer une séquence préprogrammée et de lancer une phase de mise en marche ou d'arrêt, dans lequel les fonctions de mise en marche ou d'arrêt de la machine de moulage par injection associées aux commandes de mouvement de la machine et/ou aux commandes de changement d'état de la machine de cette séquence sont déclenchées.

14. Produit de programme informatique selon la revendication 13,
**caractérisé en ce que**
une première suite de séquences de mise en marche et/ou une seconde suite de séquences d'arrêt sont regroupées chacune en un (premier) programme global de mise en marche et/ou en un (second) programme global d'arrêt.

15. Support lisible par ordinateur, sur lequel le produit de programme informatique selon la revendication 13 ou 14 est stocké.
